# EUROPÄISCHE PATENTSCHRIFT

(11) **EP 4 324 047 B1**
(45) Veröffentlichungstag und Bekanntmachung des Hinweises auf die Patenterteilung: **04.06.2025**
(21) Anmeldenummer: 22721370.9
(22) Anmeldetag: 08.04.2022
(51) Int. Cl.: H01M 50/533, B23K 20/10, B23K 26/32, B23K 26/26, B23K 26/244, H01R 43/02, H01M 50/534, B23K 101/38, B23K 103/10, B23K 103/12, B23K 101/36

(54) **ZELLVERBINDER UND VERFAHREN ZUM KONTAKTIEREN WENIGSTENS ZWEIER GALVANISCHER ZELLEN**
CELL CONNECTOR AND METHOD FOR CONTACTING AT LEAST TWO GALVANIC CELLS
CONNECTEUR DE CELLULE ET PROCÉDÉ DE MISE EN CONTACT D'AU MOINS DEUX CELLULES GALVANIQUES

(30) Priorität: 15.04.2021 DE 102021001982
(43) Veröffentlichungstag der Anmeldung: 21.02.2024
(73) Patentinhaber: Mercedes-Benz Group AG, 70372 Stuttgart (DE)
(72) Erfinder: DORACIAK, Patrik, 73230 Kirchheim (DE); ELSNER, Christian, 70734 Fellbach (DE); ENGELHARDT, Thomas, 71573 Allmersbach im Tal (DE); GUSTKE, Oliver, 73630 Remshalden (DE); SCHWARZ, Marius, 70176 Stuttgart (DE); STEFFENS, Dirk, 71384 Weinstadt (DE); STOCKER, Michael, 72401 Haigerloch (DE)
(74) Vertreter: Novagraaf Group
(86) Internationale Anmeldenummer: PCT/EP2022/059395
(87) Internationale Veröffentlichungsnummer: WO 2022/218845

(56) Entgegenhaltungen:
- US-A1- 2002 146 620
- US-A1- 2009 246 620
- US-A1- 2010 173 193
- US-A1- 2012 070 720
- US-A1- 2020 373 548
- US-A1- 2020 373 584
- US-B2- 6 641 027

## Beschreibung

Die Erfindung betrifft einen Zellverbinder zum miteinander Verbinden von wenigstens zwei Ableitern und/oder Litzen aus wenigstens einem im Wesentlichen streifenförmigen Element sowie ein Verfahren zum Kontaktieren wenigstens zweier galvanischer Zellen mittels wenigstens einem solchen Zellverbinder.

Eine galvanische Zelle, auch als Batteriezelle bezeichnet, ist eine Vorrichtung zur Umwandlung von chemischer in elektrische Energie. Mit Hilfe einer solchen galvanischen Zelle lassen sich auch mobile Geräte mit elektrischer Energie versorgen. Dabei sind aus dem allgemeinen Stand der Technik verschiedenste Ausführungsformen galvanischer Zellen sowie von Batteriemodulen, welche aus einer Vielzahl miteinander verschalteter galvanischer Zellen bestehen, bekannt. So lassen sich einzelne galvanische Zelle in Reihe schalten, um eine von den galvanischen Zellen abgegebene Spannung zu erhöhen. Es lassen sich auch mehrere einzelne oder in Reihe geschaltete galvanische Zelle parallelschalten, um eine Kapazität eines aus mehreren galvanischen Zellen bestehenden Batteriemoduls zu erhöhen. Eine elektrische Verschaltung einzelner galvanischer Zellen erfolgt dabei über entsprechende Kontaktierungselemente. Insbesondere bei sogenannten Pouch-Zellen werden hierzu Aluminium- bzw. Kupfer-Ableiter verwendet.

Zur robusten Verbindung der Ableiter werden diese verschweißt. Eine solche Verbindung erfordert eine Mindestquerschnittsfläche, da über die Ableiter und damit auch eine entsprechende Verbindungsstelle vergleichsweise hohe Ströme übertragen werden. Bei einem zu geringen Querschnitt kann sich die Verbindungsstelle so stark aufheizen, dass eine Beschädigung oder Zerstörung einzelner Komponenten einer Pouch-Zelle und/oder eines Batteriemoduls droht. Zur Wahrung einer hohen Prozesssicherheit beim Herstellen der Schweißverbindung zwischen mehreren Ableitern gilt es einige Herausforderungen zu überwinden. So ist es erforderlich, dass zwei zu verbindende Ableiter möglichst großflächig aufeinander aufliegen, da bei einer mangelnden Kontaktierung der beiden Ableiter Lücken zwischen den Ableitern nach dem Verschweißen der Ableiter weiter bestehen können. So werden die zu verbindenden Ableiter oftmals mittels gefederten Spannfingern, Spannrahmen oder dergleichen vor einem Schweißvorgang zusammengedrückt, um einen Spalt zwischen den Ableitern auszugleichen. Als Gegenlager wird dabei oftmals ein Zellrahmen genutzt. Aufgrund von Toleranzen beim Biegen der Ableiter oder Stapeln der galvanischen Zellen, durch Verrutschen der galvanischen Zellen beim Transport sowie durch eine falsch eingestellte Spannkraft einer Spannvorrichtung kann es trotzdem zu einer Spaltbildung zwischen den zu verbindenden Ableitern kommen. Die Spannkraft kann außerdem nicht beliebig hoch gewählt werden, da eine maximale Spannkraft durch eine Stabilität bzw. Festigkeit des Zellrahmens begrenzt ist.

Typischerweise umfasst ein erster Ableiter einer zu verschweißenden Ableiterpaarung Aluminium bzw. eine Aluminiumlegierung und der weitere Ableiter Kupfer bzw. eine Kupferlegierung. Somit ist eine stoffschlüssige Verbindung zwischen zwei unterschiedlichen Werkstoffen herzustellen. Eine Wahl und Einhaltung korrekter Schweißparameter ist somit besonders anspruchsvoll. So besteht ein hohes Risiko, dass es beispielsweise zu einem Durchschweißen durch die Ableiter in den Zellrahmen kommen kann. Bei einer Parallelverschaltung mehrerer galvanischer Zellen werden mehrere Lagen von Ableitern miteinander verschweißt, wodurch sich Toleranzen und Stapelfehler aufaddieren können.

Typischerweise werden Ableiter von Pouch-Zellen mittels Laserschweißen verbunden. Es können auch andere Schweißverfahren wie Ultraschallschweißen angewendet werden, welche jedoch mit spezifischen Nachteilen einhergehen. So erfordert Ultraschallschweißen eine beidseitige Zugänglichkeit zu verschweißenden Werkstücken und einen hohen Platzbedarf zum Spannen der Werkstücke. Ultraschallschweißanlagen fallen daher vergleichsweise groß aus. Zudem verschleißen zum Schweißen verwendete Elektroden. Außerdem kann es zu einem Klebenbleiben der zu verbindenden Ableiter an den Schweißelektroden kommen.

Ferner ist bekannt, mehrere galvanische Zellen mittels eines sogenannten Zellverbinders parallel zu verschalten. Bei dem Zellverbinder handelt es sich beispielsweise um ein metallisches streifenförmiges Element. Weisen die zu verbindenden galvanischen Zellen einen Höhenversatz zueinander auf, so liegt der Zellverbinder schräg auf den zu verbindenden Ableitern auf, wodurch lediglich ein punktueller oder linienförmiger Kontakt zwischen Zellverbinder und Ableitern besteht. Dies führt zu einer Querschnittsminderung einer elektrischen Kontaktierung der zu verbindenden galvanischen Zellen. Um einen solchen Höhenversatz auszugleichen, kann ein solcher Zellverbinder wenigstens entlang eines Abschnitts gebogen sein. Dabei besteht jedoch das Problem, dass der Zellverbinder genau positioniert werden muss, um eine Schweißnaht mit einer ausreichenden Güte herstellen zu können. Je mehr Zellen mit einem Zellverbinder zu verbinden sind, desto gravierender können die aus dem Höhenversatz resultierenden Probleme werden. So kann bei einzelnen Zellen der Höhenversatz so groß ausfallen, dass ein Luftspalt zwischen Ableiter und Zellverbinder besteht. Zudem ist es bekannt, Öffnungen im Zellverbinder zum Hindurchführen der Ableiter vorzusehen. Dies erfordert jedoch ein Einfädeln der Ableiter durch den Zellverbinder und führt zu einer mechanischen Belastung der Ableiter, wodurch diese beschädigt werden können. Zudem besteht die Gefahr, dass Laserstrahlung auf die zu kontaktierenden galvanischen Zellen trifft. Um dies zu vermeiden, werden verschärfte Anforderungen an eine Positionierung der zu verbindenden galvanischen Zellen bzw. Ableiter und Zellverbinder in einer Laserschweißmaschine gestellt.

Ferner ist aus der US 6,641,027 B2 ein Verfahren zum Kontaktieren von elektrischen Anschlüssen mit Batterieableitern bekannt. In einer Vielzahl elektronischer Geräte erfolgt eine Verbindung einer Batterie mit elektrischen Schaltkreisen des elektronischen Geräts durch Schweißen oder Löten. Aufgrund eines geringen zur Verfügung stehenden Bauraums innerhalb des elektronischen Geräts besteht jedoch eine schlechte Zugänglichkeit zu den entsprechenden Schweiß- bzw. Lötstellen. Das in der Druckschrift offenbarte Verfahren beschreibt das Anformen von metallischen Streifen an Ableiter einer Batteriezelle, welche dann aufgrund einer größeren Fläche und besseren Zugänglichkeit einfacher mit weiteren stromführenden Bauteilen bzw. elektrischen Anschlüssen kontaktiert werden können. Hierzu wird je Ableiter ein metallischer Streifen flächig auf einen Ableiter aufgelegt und um diesen herumgebogen, sodass der metallische Streifen den Ableiter möglichst umfänglich umgibt. Ein hierdurch hergestellter Schichtaufbau aus Ableiter und metallischem Streifen wird dann in einer Ultraschallschweißanlage eingespannt und die einzelnen Lagen mittels Ultraschallschweißen verbunden. Anschließend wird der durch Schweißen fixierte Schichtaufbau auf Maß geschnitten.

Ferner offenbart die US 2002/146620 A1 ein Verfahren zum Verbinden von Zellableitern in einer mehrschichtigen Zelle. Die Zellableiter werden dabei übereinandergelegt, zusammengepresst und miteinander verschweißt. Anschließend wird das verschweißte Paket aus Zellableitern platzsparend eingeklappt.

Ferner offenbart die US 2009/0246620 A1 einen Lithiumakku. Der Akku ist dabei als Pouchzelle ausgeführt. Zellableiter stützen sich auf zwei Platten ab. Die Platten sind gebogen, um sich entlang des Umfangs der Pouchzelle auf jeweils zwei Seiten zu erstrecken.

Ferner offenbart die US 2010/0173193 A1 eine Lithium-Ionen-Sekundärbatterie im Pouchzellen Format. Die Sekundärbatterie umfasst zwei Zellableiter, von denen einer als variabler Zellableiter ausgeführt ist. Zum Verbinden des variablen Zellableiters mit einem Elektrodenableiter der Sekundärbatterie kann einer der Ableiter U-förmig umgebogen sein, sodass ein Abschnitt des anderen Zellableiters von dem umgebogenen Abschnitt gehalten werden kann.

Ferner offenbart die US 2012/0070720 A1 eine Batterie und ein Verfahren zum Ultraschallschweißen für die Batterie. Dabei ist ein Zellableiter mit mehreren Elektrodenableitern per Ultraschallschweißen verbunden. Der Querschnitt des Zellableiters vergrößert sich ausgehend von der Schweißstelle in Richtung eines externen Ableiters.

Ferner offenbart die US 2020/373548 A1 eine rechteckige Sekundärbatterie. Ein externer Anschluss ist dabei elektrisch leitend an einen Sammelanschluss angeschlossen. Mehrere Sammelableiter mehrerer galvanischer Zellen sind elektrisch leitend über ein Klemmelement an den Sammelanschluss angeschlossen. Dabei weisen die Sammelableiter jeweils einen gekrümmten Abschnitt auf, der am Klemmelement festklemmbar ist.

Zudem offenbart die US 2020/0373584 A1 Batterieverbindungen und metallisierte Filmkomponenten in Energiespeichereinrichtungen mit internen Sicherungen. Dabei ist ein Ableiter an einen Stromsammler einer galvanischen Zelle angeschlossen. Der Stromsammler hat einen mehrschichtigen Aufbau. Mehrere Stromsammler sind per Schweißverbindung an den Ableiter angeschlossen. Ein solches Paket ist mittels eines Verstärkungsbands oder einer Klemme verpressbar.

Der vorliegenden Erfindung liegt die Aufgabe zugrunde, einen Zellverbinder zum miteinander verbinden von wenigstens zwei Ableitern und/oder Litzen anzugeben, mit dessen Hilfe die zu verbindenden Ableiter bzw. Litzen zuverlässig zueinander ausgerichtet werden, sodass mit einem reduzierten Aufwand eine besonders zuverlässige Schweißverbindung zwischen den zu verbindenden Ableitern und/oder Litzen hergestellt werden kann. Eine weitere Aufgabe der vorliegenden Erfindung ist es, ein Verfahren zum Kontaktieren wenigstens zweier galvanischer Zellen mittels wenigstens eines solchen Zellverbinders anzugeben.

Erfindungsgemäß wird diese Aufgabe durch einen Zellverbinder mit den Merkmalen des Anspruchs 1 sowie ein Verfahren zum Kontaktieren wenigstens zweier galvanischer Zellen mit den Merkmalen des Anspruchs 10 gelöst. Vorteilhafte Ausgestaltungen und Weiterbildungen ergeben sich aus den hiervon abhängigen Ansprüchen.

Ein Zellverbinder zum miteinander verbinden von wenigstens zwei Ableitern und/oder Litzen aus wenigstens einem im Wesentlichen streifenförmigen Element weist wenigstens fünf in einer Längsrichtung am streifenförmigen Element hintereinander angeordnete Abschnitte auf. Erfindungsgemäß bildet ein erster Abschnitt eine erste Hälfte eines Verschlusselements, ein zweiter Abschnitt eine erste Klemmfläche, ein dritter Abschnitt ein Umlenkelement, ein vierter Abschnitt eine zweite Klemmfläche und ein fünfter Abschnitt eine zweite Hälfte des Verschlusselements aus. Der dritte Abschnitt ist dazu eingerichtet, ein Umklappen des ersten und des zweiten Abschnitts relativ zum vierten und fünften Abschnitt um eine in eine orthogonal zur Längsrichtung verlaufende Breitenrichtung durch den dritten Abschnitt verlaufende Klappachse zu ermöglichen. Hierdurch ist das streifenförmige Element in einen zusammengeklappten Zustand überführbar, in welchem wenigstens ein Abschnitt der ersten und der zweiten Klemmfläche im Wesentlichen in eine orthogonal zur Längs- und Breitenrichtung verlaufende Dickenrichtung sich gegenüberliegen und somit eine Aufnahme für die Ableiter und/oder Litzen ausbilden. Der erste und der fünfte Abschnitt sind im zusammengeklappten Zustand des streifenförmigen Elements miteinander verbindbar, um das wenigstens eine streifenförmige Element im zusammengeklappten Zustand zu fixieren.

Mit Hilfe des erfindungsgemäßen Zellverbinders ist ein besonders zuverlässiges zueinander Ausrichten und Fixieren zur verbindender Ableiter und/oder Litzen möglich, was eine Prozesssicherheit in einem sich an das zueinander Ausrichten anschließenden Schweißvorgang zum stoffschlüssigen Verbinden der Ableiter und/oder Litzen erhöht. So werden durch Zusammenklappen des wenigstens einen im Wesentlichen streifenförmigen Elements, im Folgenden als Schließen bezeichnet, die zu verbindenden Ableiter und/oder Litzen aufeinandergepresst, wodurch Stapeltoleranzen ausgeglichen werden. Ist das wenigstens eine im Wesentlichen streifenförmige Element geschlossen, so werden die zu verbindenden Ableiter und/oder Litzen fixiert und können sich auch bei einem Transportvorgang zu einer Schweißstation nicht mehr relativ zueinander bewegen und somit voneinander lösen. Das wenigstens eine im Wesentlichen streifenförmige Element umgibt im zusammengeklappten Zustand die Aufnahme vollständig in eine Umfangsrichtung. Somit bildet der vierte Abschnitt bzw. die zweite Klemmfläche ein Substrat bzw. einen Untergrund für einen Laserschweißprozess aus, was ein Durchschweißen durch die Ableiter und/oder Litzen erschwert. Der zweite Abschnitt bzw. die erste Klemmfläche ist in einem Laserschweißvorgang zwischen den zu verbindenden Ableitern und/oder Litzen und einer Laserlichtquelle angeordnet und stellt somit ein Materialdepot dar. So ist es möglich, den zweiten Abschnitt ebenfalls aufzuschmelzen und in eine stoffschlüssige Verbindung zwischen den zu verbindenden Ableitern und/oder Litzen zu integrieren. Hierdurch ist es möglich, potenzielle Spalte auszufüllen. Durch eine entsprechende Werkstoffwahl lässt sich zudem die entstehende Schweißverbindung gezielt legieren.

Zudem lässt sich ein Fertigungsaufwand zum Kontaktieren mehrerer galvanischer Zellen über die Ableiter durch Verwenden des erfindungsgemäßen Zellverbinders reduzieren. So entfällt eine aufwändige Justage von zum Aufeinanderpressen der zu verbindenden Ableiter verwendeten Spannbrillen. Mit Hilfe des erfindungsgemäßen Zellverbinders werden die zu verbindenden Ableiter besonders einfach und zuverlässig aufeinandergepresst. Dies erlaubt es auch, abweichende Zellgeometrien flexibel miteinander zu verbinden, da es nicht erforderlich ist, eine zum Verpressen der Ableiter verwendete Spanntechnik umzubauen. Entsprechend ist eine typ- bzw. variantenflexible Laserkabine denkbar. Hierdurch sinkt auch ein Programmieraufwand der zum Verschweißen der zu verbindenden Ableiter und/oder Litzen verwendeten Laserschweißmaschine. Entstehende Schweißnähte lassen sich zudem einfacher kontrollieren, da diese nicht mehr durch eine aufwändige Spanntechnik verdeckt werden. Zudem lässt sich der erfindungsgemäße Zellverbinder besonders einfach und kostengünstig herstellen. So handelt es sich bei dem Zellverbinder beispielsweise um ein einfaches Blech-Biege-Stanzteil. Auch kann der erfindungsgemäße Zellverbinder gemäß einer vorteilhaften Ausgestaltung aus einem Blech herausgeschnitten werden.

Eine vorteilhafte Weiterbildung des Zellverbinders sieht vor, dass der dritte Abschnitt wenigstens eine Perforation, ein Scharnier und/oder ein elastisches Material umfasst und/oder wenigstens abschnittsweise profiliert ist. Der dritte Abschnitt dient dazu, ein Umlenken bzw. Umbiegen einzelner Abschnitte des Zellverbinders zu ermöglichen, um das wenigstens eine im Wesentlichen streifenförmige Element zu schließen bzw. in den zusammengeklappten Zustand zu bringen. Durch das Einbringen von Perforationen in den dritten Abschnitt wird eine Biegesteifigkeit des dritten Abschnitts reduziert, wodurch das im Wesentlichen streifenförmige Element besonders einfach um die Klappachse gebogen werden kann. Die Perforationen können beliebig ausgestaltet sein. Beispielsweise handelt es sich um eine oder mehrere rechteckförmige Ausstanzungen. Die Ausstanzungen können jedoch auch eine beliebige Form aufweisen. So können die Ausstanzungen bzw. Perforationen auch beispielsweise oval, kreisrund oder in Form eines beliebigen Polygons ausgeführt sein. Zusätzlich oder alternativ zu den Perforationen kann auch ein Scharnier in den dritten Abschnitt integriert sein oder diesen ausbilden. Mittels eines zweiteiligen Scharniers ist es möglich, den Zellverbinder durch miteinander verbinden von wenigstens zwei im Wesentlichen streifenförmigen Elementen auszubilden. Dabei umfasst ein erstes im Wesentlichen streifenförmiges Element den ersten und zweiten Abschnitt und ein zweites im Wesentlichen streifenförmiges Element den vierten und fünften Abschnitt. Beispielsweise kann der dritte Abschnitt auch ein Filmscharnier aufweisen oder von diesem ausgebildet sein. Zusätzlich oder alternativ kann der dritte Abschnitt auch ein elastisches Material umfassen. Beispielsweise kann der dritte Abschnitt Gummi, beispielsweise ein Elastomer, umfassen. Ein elastisches Material lässt sich besonders einfach biegen, strecken oder stauchen, wodurch das wenigstens eine im Wesentlichen streifenförmige Element besonders einfach in den zusammengeklappten Zustand überführbar ist. Auch kann ein Gelenk in den dritten Abschnitt integriert sein oder diesen ausbilden. Zusätzlich oder alternativ kann der dritte Abschnitt auch profiliert sein. Beispielsweise kann der dritte Abschnitt wie eine Ziehharmonika oder eine Umhüllung eines Gelenks eines Gelenkbusses ausgestaltet sein. Dies vereinfacht ein Umbiegen bzw. Umlenken der einzelnen Abschnitte des wenigstens einen streifenförmigen Elements noch weiter. Die Profilierung kann dabei beliebig ausgeführt sein, insbesondere eine beliebige Orientierung im dritten Abschnitt aufweisen. Beispielsweise verläuft die Profilierung bevorzugt in die Längsrichtung. Hierdurch wird eine gewisse Mindestbiegesteifigkeit in die Breitenrichtung gewährleistet und eine Biegesteifigkeit um die Klappachse reduziert. So lässt sich das wenigstens eine im Wesentlichen streifenförmige Element besonders einfach in den zusammengeklappten Zustand überführen, wobei ein Verkippen der sich gegenüberliegenden Abschnitte verhindert bzw. reduziert wird. Hierdurch kann gewährleistet werden, dass im zusammengeklappten Zustand der zweite und vierte Abschnitt bzw. die erste und zweite Klemmfläche möglichst parallel zueinander ausgerichtet bleiben, was eine Zuverlässigkeit einer Anpressung der zu verbindenden Ableiter und/oder Litzen erhöht.

Entsprechend einer weiteren vorteilhaften Ausgestaltung des Zellverbinders sind der erste Abschnitt und der fünfte Abschnitt dazu eingerichtet, einen Formschluss einzugehen, insbesondere durch Umbiegen, Umbördeln, Einrollen oder Clinchen wenigstens eines der Abschnitte; und/oder
es sind der erste Abschnitt und der fünfte Abschnitt dazu eingerichtet, einen Kraftschluss und/oder Stoffschluss einzugehen, insbesondere durch Vernieten, Verschrauben, Verschweißen und/oder Verkleben der Abschnitte. Hierdurch lassen sich der erste und der fünfte Abschnitt besonders zuverlässig fixieren. Ein ungewolltes Öffnen des wenigstens einen im Wesentlichen streifenförmigen Elements aus dem zusammengeklappten Zustand lässt sich somit zuverlässig verhindern. Insbesondere weisen der erste und der fünfte Abschnitt eine entsprechende zueinander passende Geometrie auf, damit sich diese besonders einfach verbinden lassen. Beispielsweise kann der erste Abschnitt als Lasche ausgeführt sein und der fünfte Abschnitt als Tasche zur Aufnahme der Lasche. So kann die Lasche in die Tasche umgebogen werden, wodurch der erste und der fünfte Abschnitt besonders einfach miteinander verbindbar sind. Zusätzlich lässt sich diese Verbindung dann durch beispielsweise Krimpen sichern. Es ist auch möglich, eine formschlüssige Verbindung zwischen dem ersten und fünften Abschnitt beispielsweise durch Verlöten der beiden Abschnitte zu sichern. Generell ist es auch denkbar, dass wenigstens eine im Wesentlichen streifenförmige Element durch Überstülpen oder sonstiges Befestigen eines zusätzlichen Spannmittels im zusammengeklappten Zustand zu fixieren. Beispielsweise lässt sich ein vergleichsweise enges Gummiband über ein sich im zusammengeklappten Zustand befindliches im Wesentlichen streifenförmiges Element stülpen. Hierzu kann beispielsweise auch ein Schrumpfschlauch verwendet werden.

Eine weitere vorteilhafte Ausgestaltung des Zellverbinders sieht ferner vor, dass der zweite Abschnitt eine vollständig in die Dickenrichtung durch den zweiten Abschnitt verlaufende Aussparung zur Ausbildung eines Schweißfensters aufweist, insbesondere eine im Wesentlichen rechteckförmige Aussparung, wobei eine längere Kante der Aussparung in die Längsrichtung verläuft. Durch Einbringen der Aussparung in den zweiten Abschnitt bzw. die erste Klemmfläche wird eine direkte Zugänglichkeit eines Lasers einer Laserschweißmaschine auf die zu verbindenden Ableiter und/oder Litzen ermöglicht. Somit entfällt das Erfordernis durch den zweiten Abschnitt bzw. die erste Klemmfläche hindurchschweißen zu müssen. Hierdurch wird eine thermische Belastung der zu verbindenden Elemente reduziert. Außerdem können höhere Schweißgeschwindigkeiten und/oder eine geringere Laserleistung ermöglicht werden. Zudem ist eine entstehende Schweißnacht optisch einfacher kontrollierbar. Indem die Aussparung bzw. das Schweißfenster insbesondere im Wesentlichen in die Längsrichtung verläuft, fällt eine lange Kante der Aussparung mit einer vorzugsweise gewählten Schweißnahtrichtung zusammen. Es ist auch denkbar, die Aussparung unterbrochen auszuführen, sodass einzelne Abschnitte einer entstehenden Schweißnaht mit einem durch Aufschmelzen eines Materials des im Wesentlichen streifenförmigen Elements legiert werden können. Hierdurch kann eine Leitfähigkeit und/oder mechanische Belastbarkeit der Schweißnaht noch gezielter eingestellt werden. Analog zu den in den dritten Abschnitt eingebrachten Perforationen lässt sich auch die Aussparung zur Ausbildung des Schweißfensters beispielsweise durch Ausstanzen der Aussparung in den zweiten Abschnitt einbringen. Es ist jedoch auch möglich, die Aussparung beispielsweise aus dem zweiten Abschnitt herauszuschneiden, beispielsweise mittels Laserstrahl oder Wasserstrahl.

Entsprechend einer weiteren vorteilhaften Ausgestaltung des Zellverbinders sind wenigstens zwei in die Längsrichtung parallel zueinander angeordnete streifenförmige Elemente über wenigstens einen sich vom zweiten und/oder vom vierten Abschnitt in die Breitenrichtung vom streifenförmigen Element weg erstreckenden und in die Längsrichtung verlaufenden Steg verbunden. Mittels eines solchen Zellverbinders lassen sich einzelne galvanische Zellen und/oder in Reihe geschattete Zellen besonders einfach und zuverlässig parallelverschalten. Der Steg kann dabei eine beliebige Gestalt aufweisen. Insbesondere erstreckt er sich in die Längsrichtung über eine vollständige Länge des zweiten und/oder vierten Abschnitts. Hierdurch wird ein in die Breitenrichtung betrachteter Querschnitt des Stegs erhöht, wodurch eine thermische Belastung des Stegs aufgrund vergleichsweise hoher Ströme reduziert werden kann. Insbesondere weist der Steg in die Dickenrichtung betrachtet eine gleiche Materialstärke auf wie die übrigen Abschnitte der im Wesentlichen streifenförmigen Elemente. Hierdurch lässt sich ein entsprechender Zellverbinder besonders einfach fertigen. So kann dieser ebenfalls aus einem Blech herausgestanzt oder geschnitten werden.

Eine weitere vorteilhafte Ausgestaltung des Zellverbinders sieht ferner vor, dass der Steg wenigstens eine Perforation aufweist, wobei insbesondere der Steg eine geringere Stärke in die Dickenrichtung aufweist als das im Wesentlichen streifenförmige Elemente und/oder der Steg in die Breitenrichtung gewellt ist. Hierdurch lässt sich ein Höhenversatz nebeneinander angeordneter und durch den erfindungsgemäßen Zellverbinder verbundener galvanischer Zellen noch einfacher ausgleichen. Durch die in den Steg eingebrachten Perforationen lassen sich die einzelnen im Wesentlichen streifenförmigen Elemente einfach relativ zueinander in die Dickenrichtung verschieben. Eine entsprechende Steifigkeit des Steges kann durch Reduzieren einer Stärke des Steges in die Dickenrichtung noch weiter reduziert werden. Auch kann eine in die Längsrichtung betrachtete Querschnittsform des Steges eine entsprechende Kontur aufweisen, beispielsweise kann der Querschnitt gewellt sein, um einen Höhenversatz zwischen einzelnen im Wesentlichen streifenförmigen Elementen eines Zellverbinders in die Dickenrichtung einfacher ausgleichen zu können.

Entsprechend einer weiteren vorteilhaften Ausgestaltung des Zellverbinders weist wenigstens ein im Wesentlichen streifenförmiges Element einen in die Längsrichtung verlaufenden und sich in die Breitenrichtung vom zweiten und/oder vierten Abschnitt weg erstreckenden Verbindungsflansch zum Kontaktieren des im Wesentlichen streifenförmigen Elements mit einer dem im Wesentlichen streifenförmigen Element übergeordneten stromführenden Komponente auf. Mit Hilfe des Verbindungsflansches ist ein einfaches Kontaktieren des erfindungsgemäßen Zellverbinders beispielsweise mit einer Stromkontaktschiene möglich. Hierdurch können zudem mehrere Batteriemodule oder Zellblöcke besonders einfach miteinander verschaltet werden. Der Verbindungsflansch kann dabei analog zum ersten bzw. fünften Abschnitt eine speziell an bestimmte Einbausituationen bzw. geometrische Situationen angepasste Form aufweisen.

Beispielsweise können ein oder mehrere Durchgangslöcher in den Verbindungsflansch eingebracht werden, um eine Verschraubung des Verbindungsflansches mit beispielsweise der Stromkontaktschiene zu ermöglichen. Dabei kann ein Stromfluss durch eine durch ein Durchgangsloch hindurchgeführte Schraube erfolgen. Generell ist es denkbar, dass eine beliebige formschlüssige, kraftschlüssige und/oder stoffschlüssige Verbindung zwischen wenigstens einem Verbindungsflansch und wenigstens einer übergeordneten stromführenden Komponente hergestellt wird. So kann der Verbindungsflansch beispielsweise mit der Stromkontaktschiene auch verschweißt oder vernietet werden. Vorteilhaft ist ein Verbindungsflansch von einem sich an einem Rand befindlichen im Wesentlichen streifenförmigen Element eines mehrere solcher Elemente umfassenden Zellverbinders umfasst.

Eine weitere vorteilhafte Ausgestaltung des Zellverbinders sieht ferner vor, dass zur Erhöhung einer in die Dickenrichtung wirkenden Anpresskraft der ersten und zweiten Klemmfläche auf die in der Aufnahme angeordneten Ableiter und/oder Litzen im zusammengeklappten Zustand des wenigstens einen im Wesentlichen streifenförmigen Elements der zweite Abschnitt wenigstens abschnittsweise in die Dickenrichtung gekrümmt ist und/oder wenigstens eine Hälfte des Verschlusselements eine sich im verbundenen Zustand des Verschlusselements in die Dickenrichtung erstreckende Konturierung aufweist. Vorzugsweise werden die zu verbindenden Ableiter und/oder Litzen mit einer vergleichsweise hohen Anpresskraft aufeinandergedrückt, um diese besonders zuverlässig zueinander zu fixieren. Durch eine Krümmung des zweiten Abschnitts wird diese Anpresskraft durch eine aus der Krümmung resultierende Federwirkung des zweiten Abschnitts erhöht. Dabei kann der gesamte zweite Abschnitt gekrümmt sein oder wenigstens abschnittsweise einzelne Krümmungen aufweisen. Dabei können die einzelnen Krümmungen einen gleichen oder abweichenden Krümmungsradius aufweisen. Zusätzlich oder alternativ zur Krümmung des zweiten Abschnitts kann auch eine oder beide Hälften des Verschlusselements in die Dickenrichtung verlaufende Konturierungen aufweisen. Diese können eine beliebige Querschnittsform aufweisen. Beispielsweise kann es sich um kegelförmige oder pyramidenförmige Spitzen handeln. Auch kann wenigstens eine Hälfte des Verschlusselements abschnittsweise in die Dickenrichtung gewellt sein. Durch die Konturierung ist es erforderlich den ersten und zweiten Abschnitt weiter um die Klappachse zu klappen, bis ein Verschließen des ersten und fünften Abschnitts möglich ist. Hierdurch wird ein Abstand der ersten und zweiten Klemmfläche in die Dickenrichtung reduziert, wodurch eine Anpresskraft auf sich in der Aufnahme befindlicher Ableiter und/oder Litzen vergrößert.

Bevorzugt wird das wenigstens eine im Wesentlichen streifenförmige Element vollständig von einem leitfähigen Material, insbesondere einem Metall und/oder einer Metalllegierung und bevorzugt von einem Metallblech ausgebildet oder es wird das wenigstens eine im Wesentlichen streifenförmige Element wenigstens abschnittsweise von einem leitfähigen Material, insbesondere einem Metall oder einer Metalllegierung und bevorzugt von einem Metallblech und wenigstens abschnittsweise von einem Strom isolierenden Material ausgebildet, wobei das isolierende Material vorteilhaft zumindest den vierten Abschnitt ausbildet. Umfasst das wenigstens eine im Wesentlichen streifenförmige Element ein leitfähiges Material, so kann ein Stromfluss zwischen mehreren zu verbindenden Ableitern und/oder Litzen wenigstes abschnittsweise auch durch das wenigstens eine im Wesentlichen streifenförmige Element verlaufen. Somit lässt sich mit Hilfe wenigstens zweier streifenförmiger Elemente beispielsweise auch besonders einfach eine parallele Verschaltung mehrerer galvanischer Zellen umsetzen. Umfasst das wenigstens eine im Wesentlichen streifenförmige Element Metall oder eine Metalllegierung, so lässt sich beispielsweise der zweite Abschnitt auch aufschweißen und in eine stoffschlüssige Schweißverbindung der zu verbindenden Ableiter und/oder Litzen integrieren.

Auch ist es denkbar, dass bei einem Zellverbinder aus wenigstens zwei im Wesentlichen streifenförmigen Elementen ein erstes im Wesentlichen streifenförmiges Element den ersten und zweiten Abschnitt umfasst und ein zweites im Wesentlichen streifenförmiges Element den vierten und fünften Abschnitt umfasst, wobei das erste im Wesentlichen streifenförmige Element vollständig aus einer Metalllegierung gefertigt ist und das zweite im Wesentlichen Streifenförmige Element aus dem isolierenden Material gefertigt ist. Umfasst der vierte Abschnitt, also die zweite Klemmfläche, das isolierende Material, so kann dieses als Badstütze fungieren. Umfasst hingegen auch der vierte Abschnitt Metall oder eine Metalllegierung, kann auch in diesen hineingeschweißt werden, was eine prozesssichere Kontaktierung der Ableiter und/oder Litzen gewährleistet.

Generell ist es auch denkbar, dass der vollständige Zellverbinder aus dem isolierenden Material gefertigt ist.

Bei einem Verfahren zum Kontaktieren wenigstens zweier galvanischer Zellen mittels wenigstens einem im vorigen beschriebenen Zellverbinder werden erfindungsgemäß zumindest die folgenden Verfahrensschritte durchgeführt:
- Zueinander Ausrichten zu verbindender Ableiter und/oder Litzen;
- Anordnen des Zellverbinders zu den Ableitern und/oder Litzen, sodass sich der vierte Abschnitt zumindest abschnittsweise mit einer der Aufnahme abgewandten Seite auf einer Umhüllung wenigstens einer galvanischen Zelle abstützt und/oder wenigstens ein Ableiter und/oder wenigstens eine Litze auf einer der Aufnahme zugwandten Seite des vierten Abschnitts aufliegt;
- Umklappen des ersten und zweiten Abschnitts durch die durch den dritten Abschnitt in die Breitenrichtung verlaufende Klappachse, um das streifenförmige Element in den zusammengeklappten Zustand zu bringen;
- Verschließen des Verschlusselements;
- Verschweißen der zu verbindenden Ableiter und/oder Litzen oder Verschweißen wenigstens eines Abschnitts des Zellverbinders mit den zu verbindenden Ableitern und/oder Litzen, insbesondere mittels wenigstens einer in die Längsrichtung verlaufenden Schweißnaht, wobei als Schweißverfahren bevorzugt Laserschweißen eingesetzt wird.

Dabei werden zu verbindende Ableiter und/oder Litzen so zueinander ausgerichtet, dass sich diese möglichst großflächig berühren bzw. aufeinanderliegen, um eine widerstandsarme Kontaktierung der zu verbindenden galvanischen Zellen zu ermöglichen. Die zu verbindenden Ableiter und/oder Litzen werden in diesem Zustand mit Hilfe des erfindungsgemäßen Zellverbinders fixiert. Hierzu wird der erfindungsgemäße Zellverbinder wie eine Klammer um die zu verbindenden Ableiter und/oder Litzen geführt und geschlossen. Optional kann sich dabei der erfindungsgemäße Zellverbinder auf einer Umhüllung wenigstens einer galvanischen Zelle bzw. eines die galvanische Zelle umfassenden Batteriemoduls und/oder Batteriegehäuses abstützen. Vorzugsweise liegt wenigstens ein Ableiter und/oder wenigstes eine Litze flächig auf zumindest einer der Klemmflächen auf. Hierdurch lässt sich besonders gleichmäßig eine Anpresskraft auf die zu verbindenden Ableiter und/oder Litzen aufprägen. Ein Verschließen des Verschlusselements erfolgt über einen beliebigen Formschluss, Kraftschluss und/oder Stoffschluss. Beispielsweise können einzelne Abschnitte einer Hälfte des Verschlusselements, beispielsweise eine Lasche oder ein Vorsprung, umgeklappt, umgebördelt, eingerollt oder dergleichen werden, um beispielsweise von einer Öffnung oder Aufnahme in der entsprechenden Gegenhälfte des Verschlusselements eingeführt oder aufgenommen zu werden. Durch Vernieten, Verschrauben, Verschweißen, Verlöten, Verkleben oder dergleichen lässt sich ein verschlossenes Verschlusselement zusätzlich fixieren. Anschließend lassen sich die zu kontaktierenden galvanischen Zellen sicher transportieren, ohne dass die zu verbindenden Ableiter und/oder Litzen sich beim Transport verschieben oder verrutschen können, da die durch den erfindungsgemäßen Zellverbinder auf die Ableiter und/oder Litzen aufgeprägte Anpresskraft dies unterbindet. Anschließend werden die zu verbindenden Ableiter und/oder Litzen verschweißt. Hierzu kann ein beliebiges Schweißverfahren, bevorzugt Laserschweißen, verwendet werden. Aufgrund der Verpressung der Ableiter und/oder Litzen durch den erfindungsgemäßen Zellverbinder ist das Erzeugen einer besonders zuverlässigen Schweißverbindung möglich.

Weitere vorteilhafte Ausgestaltungen des erfindungsgemäßen Zellverbinders und des erfindungsgemäßen Verfahrens ergeben sich auch aus den Ausführungsbeispielen, welche nachfolgend unter Bezugnahme auf die Figuren näher beschrieben werden.

Dabei zeigen:
- Fig. 1: eine Prinzipdarstellung von vier bekannten Varianten zum miteinander Verschalten mehrerer Pouch-Zellen;
- Fig. 2: eine Draufsicht und eine Seitenansicht eines erfindungsgemäßen Zellverbinders sowie zwei Detailansichten eines dritten Abschnitts des erfindungsgemäßen Zellverbinders;
- Fig. 3: eine Draufsicht auf einen erfindungsgemäßen Zellverbinder gemäß einer alternativen Ausführungsform;
- Fig. 4: eine Draufsicht auf einen erfindungsgemäßen Zellverbinder mit mehreren im Wesentlichen streifenförmigen Elementen;
- Fig. 5: eine Draufsicht und eine Seitenansicht eines erfindungsgemäßen Zellverbinders gemäß einer alternativen Ausführungsform;
- Fig. 6: eine Detailansicht eines in Figur 5 gezeigten Schnitts B-B;
- Fig. 7: eine Draufsicht auf einen erfindungsgemäßen Zellverbinder mit mehreren im Wesentlichen streifenförmigen Elementen gemäß einer alternativen Ausführungsform;
- Fig. 8: eine Detailansicht eines in Figur 7 gezeigten Schnitts C-C;
- Fig. 9: eine Draufsicht auf einen erfindungsgemäßen Zellverbinder gemäß einer alternativen Ausführungsform mit einem Verbindungsflansch;
- Fig. 10: eine Prinzipdarstellung eines erfindungsgemäßen Verfahrens zum Kontaktieren wenigstens zweier galvanischer Zellen;
- Fig. 11: eine Detailansicht eines in Figur 10 gezeigten Schnitts D-D; und
- Fig. 12: eine Seitenansicht auf einen Laserschweißvorgang zum Kontaktieren zweier elektrischer Kabel mittels des erfindungsgemäßen Zellverbinders.

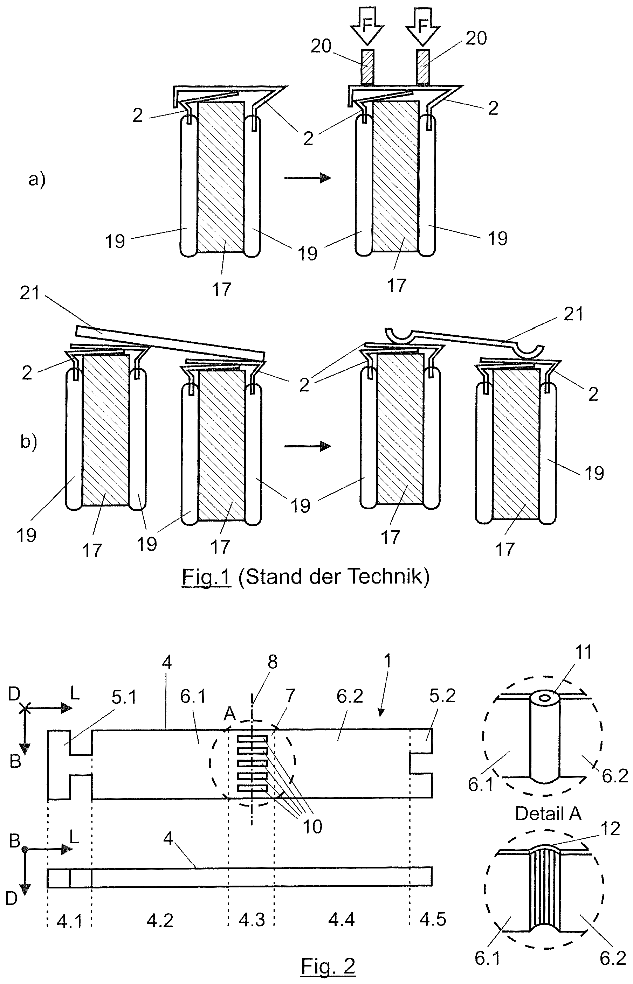

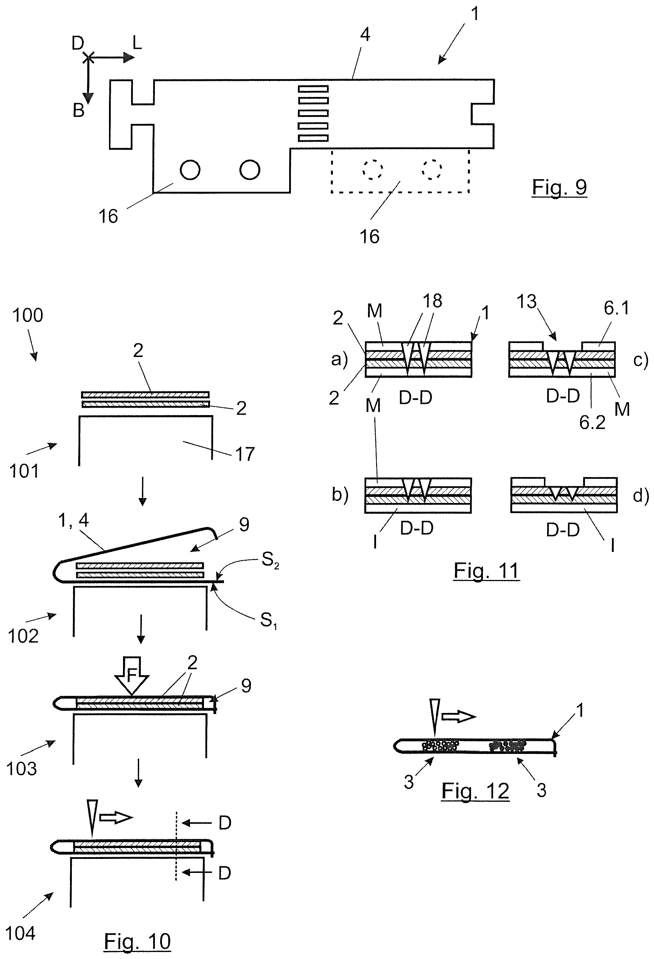

Figur 1 dient zur Veranschaulichung einer Problematik beim miteinander Verschalten mehrerer sogenannter Pouch-Zellen 19 im Stand der Technik. Dabei zeigt Figur 1a) eine Problematik beim einander Verschalten von Pouch-Zellen 19 in Reihe und Figur 1b) eine Problematik beim miteinander Verschalten mehrerer Pouch-Zellen 19 gemäß einer Parallelschaltung. Um wenigstens zwei Pouch-Zellen 19 miteinander in Reihe zu schalten, werden aus den Pouch-Zellen 19 herausgeführte Ableiter 2, meist aus Kupfer bzw. Aluminium, miteinander verschweißt. Hierzu berühren sich vorteilhafterweise die zu verbindenden Ableiter 2 flächig entlang einer möglichst großen Strecke. Aufgrund von Biegefehlern bei einer Ausrichtung der zu verbindenden Ableiter 2 zueinander und/oder Bauteiltoleranzen verlaufen die zu verbindenden Ableiter 2 nicht parallel sondern schräg zueinander, wodurch diese nicht flächig sondern lediglich entlang einer Linie oder sogar nur punktförmig aufeinander aufliegen. In diesem Falle ist das Erzeugen einer durchgehenden in Figur 11 gezeigten Schweißnaht 18 zum Verbinden der beiden Ableiter 2 nicht möglich bzw. führt zu einer fehlerhaften Schweißnaht 18.

Zum Ausgleichen solcher Biegefehler bzw. Bauteiltoleranzen werden die zu verbindenden Ableiter 2 durch Aufprägen einer Anpresskraft F mittels eines Presswerkzeugs 20 aufeinandergedrückt. Dies ist in Figur 1a) rechts gezeigt. Somit liegen die Ableiter 2 flächig aufeinander und können zuverlässig verschweißt werden. Dabei wird typischerweise eine Umhüllung 17 wenigstens einer der Pouch-Zellen 19 als Stütze verwendet. Bei der Umhüllung 17 kann es sich beispielsweise um einen Zellrahmen einer der Pouch-Zellen 19 oder auch um ein Batteriemodulgehäuse oder dergleichen handeln. Nachteilig ist dabei jedoch, dass trotzdem Biegefehler nicht vollständig ausgeglichen werden können und somit ein Nullspalt zwischen den zu verbindenden Ableitern 2 nicht erreicht werden kann. Zudem ist ein entsprechendes Presswerkezug 20 aufwändig zu justieren.

Ein weiteres Problem ist das Verbinden mehrerer Pouch-Zellen 19 zur Ausbildung einer Parallelschaltung. Hierzu wird typischerweise ein aus dem Stand der Technik bekannter Zellverbinder 21 genutzt. Weisen die parallel zu verschaltenden Pouch-Zellen 19 bzw. deren Umhüllungen 17 oder auch ein Zellrahmen der Pouch-Zellen 19 eine Höhenversatz zueinander auf, so kann dies dazu führen, dass der Zellverbinder 21 schräg auf den zu verbindenden Ableitern 2 aufliegt. Hierdurch entsteht ebenfalls ein Spalt, wodurch sich der Zellverbinder 21 nicht flächig mit den zu verbindenden Ableitern 2 verschweißen lässt. Um diese Höhendifferenz auszugleichen sind Zellverbinder 21 mit gebogenen Abschnitten bekannt. Dies ist in Figur 1b) rechts dargestellt. Dabei werden jedoch vergleichsweise hohe Anforderungen an eine möglichst exakte Positionierung der zu verbindenden Bauteile in einem Schweißvorgang gestellt. Sind mehr als zwei Pouch-Zellen 19 parallel zu verschalten, so kann sich diese Problematik noch weiter verschärfen.

Mit Hilfe eines in Figur 2 dargestellten Zellverbinders 1 lassen sich zu verbindende bzw. zu kontaktierende Pouch-Zellen 19 besonders zuverlässig mittels einem Schweißverfahren kontaktieren. Der erfindungsgemäße Zellverbinder 1 umfasst wenigstens ein im Wesentlichen streifenförmiges Element 4. Dieses umfasst fünf Abschnitte 4.1, 4.2, 4.3, 4.4, 4.5, welche sich in eine Längsrichtung L hintereinander am im Wesentlichen streifenförmigen Element 4 anordnen. Das im Wesentlichen streifenförmige Element 4 weist eine im Vergleich zu einer Ausdehnung in die Längsrichtung L und einer orthogonal auf der Längsrichtung L stehenden Breitenrichtung B geringe Ausdehnung in einer orthogonal auf der Längsrichtung L und der Breitenrichtung B stehende Dickenrichtung D auf. Der erste Abschnitt 4.1 und der fünfte Abschnitt 4.5 bilden jeweils eine Hälfte eines Verschlusselements 5.1 und 5.2 aus. Der zweite Abschnitt 4.2 bildet eine erste Klemmfläche 6.1 und der vierte Abschnitt 4.4 eine zweite Klemmfläche 6.2 aus. Der dritte Abschnitt 4.3 bildet ein Umlenkelement 7 aus. Durch das Umlenkelement 7 reicht in die Breitenrichtung B eine Klappachse 8 hindurch. Das im Wesentlichen streifenförmige Element 4 lässt sich um die Klappachse 8 zusammenklappen bzw. schließen. Um ein vergleichsweises einfaches Biegen bzw. Klappen des im Wesentlichen streifenförmigen Elements 4 um die Klappachse 8 zu ermöglichen, wird durch das Einfügen von Perforationen 10 in das Umlenkelement 7 bzw. den dritten Abschnitt 4.3 eine Biegesteifigkeit des Umlenkelements 7 reduziert. Dabei können die Perforationen 10 wie in Figur 2 dargestellt von rechteckförmigen Aussparungen ausgebildet sein. Die Perforationen 10 können jedoch jede beliebige Form aufweisen. Zusätzlich oder alternativ zu den Perforationen 10 kann das Umlenkelement 7 auch ein Scharnier 11 umfassen oder von diesem ausgebildet sein. Dies ist in einer Detailansicht A dargestellt. Bildet das Scharnier 11 den dritten Abschnitt 4.3 aus, so wird der erfindungsgemäße Zellverbinder 1 von wenigstens zwei im Wesentlichen streifenförmigen Elementen 4 ausgebildet. In diesem Falle können die jeweiligen im Wesentlichen streifenförmigen Elemente 4 aus demselben oder auch einem abweichenden Werkstoff gefertigt sein. Beispielsweise kann eines der im Wesentlichen streifenförmigen Elemente 4 aus einem leitfähigen Material M, welches in Figur 11 gezeigt ist, gefertigt sein und das andere im Wesentlichen streifenförmige Element 4 aus einem Strom isolierenden Material I gefertigt sein. Generell kann aber der vollständige Zellverbinder 1 ausschließlich aus dem leitfähigen Material M oder dem isolierenden Material I gefertigt sein. Auch kann der Zellverbinder 1 aus einem leitfähigen Material gefertigt sein, wobei eines der im Wesentlichen streifenförmigen Elemente 4 aus einem ersten leitfähigen Material M gefertigt ist, beispielsweise Aluminium, und ein zweites im Wesentlichen streifenförmiges Element 4 aus einem weiteren leitfähigen Material M gefertigt ist, beispielsweise Kupfer. Figur 2 zeigt eine weitere Detailansicht A, in welcher anstelle eines Scharniers 11 ein elastisches Material 12 zur Ausbildung des dritten Abschnitts 4.3 gezeigt ist. Dabei kann es sich beispielsweise um ein Elastomer handeln. Es ist jedes beliebige elastische Material zur Ausbildung des dritten Abschnitts 4.3 denkbar, beispielsweise Gummi, Kautschuk, Silikon oder dergleichen. Insbesondere kann der dritte Abschnitt 4.3 bzw. das Umlenkelement 7 auch wenigstens abschnittsweise profiliert sein. Hierdurch kann ein Biegewiderstand um die Klappachse 8 sowie um die Längsrichtung L gezielt eingestellt werden. Auch kann der dritte Abschnitt 4.3 ein leitfähiges Material M, insbesondere in Form eines Filmscharniers aufweisen.

Der erste Abschnitt 4.1 und der fünfte Abschnitt 4.5 bzw. die jeweiligen halben Verschlusselemente 5.1 und 5.2 weisen dabei eine zueinander passende geometrische Form auf. In dem Beispiel in Figur 2 bildet der erste Abschnitt 4.1 eine Lasche aus und der fünfte Abschnitt 4.5 eine Tasche zur Aufnahme der Lasche. Wird das im Wesentlichen streifenförmige Element 4 um die Klappachse 8 gebogen, so werden die jeweiligen Hälften des Verschlusselements 5.1 und 5.2 so zueinander ausgerichtet, dass diese einen Formschluss eingehen können. Zum Fixieren des Formschlusses können die jeweiligen Verschlusselementhälften 5.2 und 5.2 auch durch einen zusätzlichen Kraftschluss und/oder Stoffschluss gefügt werden.

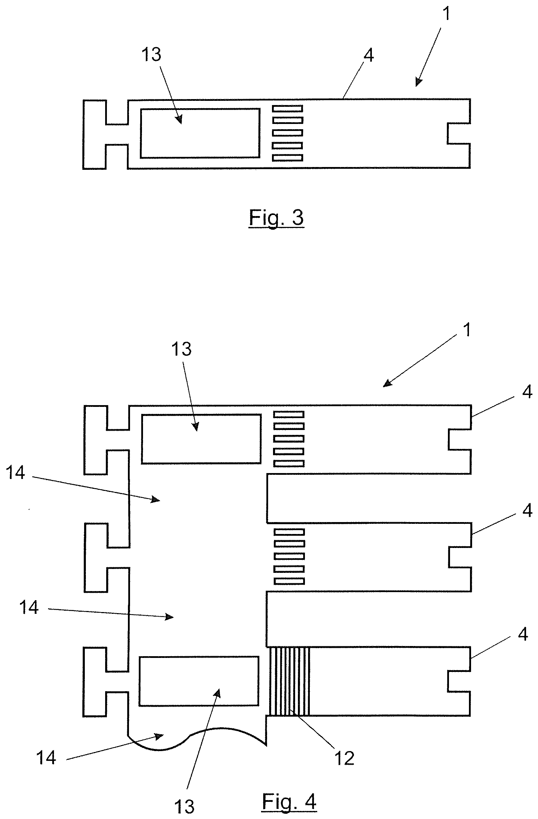

Figur 3 zeigt eine Draufsicht auf einen erfindungsgemäßen Zellverbinder 1 gemäß einer alternativen Ausführungsform. Dabei ist in den zweiten Abschnitt 4.2 bzw. die erste Klemmfläche 6.1 eine im Wesentlichen rechteckförmige Aussparung zur Ausbildung eines Schweißfensters 13 eingelassen. Das Schweißfenster 13 kann jedoch auch eine beliebige von einer Rechteckform abweichende Gestalt aufweisen. Über das Schweißfenster 13 wird eine verbesserte Zugänglichkeit eines Schweißwerkzeugs zu vom Zellverbinder 1 umschlossenen Ableitern 2 und/oder Litzen 3 gewährt, was in den Figuren 10 und 11 veranschaulicht wird.

Figur 4 zeigt eine Draufsicht auf einen erfindungsgemäßen Zellverbinder 1 mit mehreren im Wesentlichen streifenförmigen Elementen 4. Dabei sind die mehreren im Wesentlichen streifenförmigen Elemente 4 über jeweils einen Steg 14 aneinander angeschlossen. In dem Beispiel in Figur 4 ist der Steg 14 jeweils an einen zweiten Abschnitt 4.2 eines im Wesentlichen streifenförmigen Elements 4 angeschlossen. Dabei kann auch einer oder mehrere der im Wesentlichen streifenförmigen Elemente 4 ein Schweißfenster 13 aufweisen. Dabei ist es nicht zwangsweise erforderlich, dass alle Umlenkelemente 7 der im Wesentlichen streifenförmigen Elemente 4 gleich ausgestaltet sind. So kann eine beliebige Anzahl der im Wesentlichen streifenförmigen Elemente 4 beispielsweise Perforationen 10, ein Scharnier 11 und/oder ein elastisches Material 12 zur Ausbildung des Umlenkelements 7 aufweisen. Generell ist es aber auch denkbar, dass wenigstens ein Steg 14 auch wenigstens abschnittsweise an den vierten Abschnitt 4.4 eines der im Wesentlichen streifenförmigen Elemente 4 angeschlossen ist. Mit Hilfe des in Figur 4 gezeigten Zellverbinders 1 können besonders einfach mehrere galvanische Zellen bzw. Pouch-Zellen 19 zueinander parallel verschaltet werden.

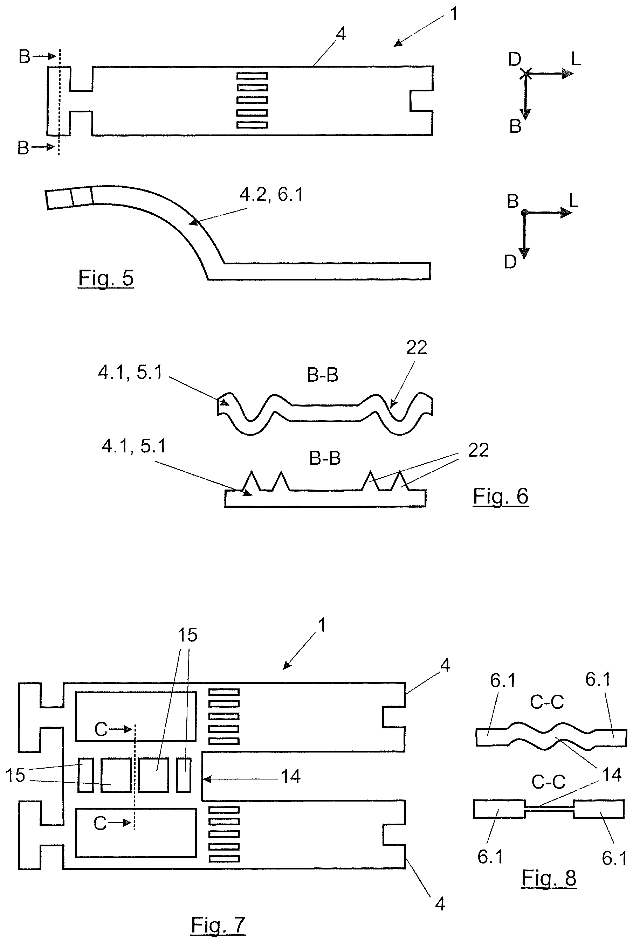

Im geschlossenen bzw. in einem zusammengeklappten Zustand umschließt das im Wesentlichen streifenförmige Element 4 zwei zu verbindende Ableiter 2 und/oder Litzen 3. Dabei übt das im Wesentlichen streifenförmige Element 4 eine Anpresskraft F auf die zu verbindenden Komponenten aus. Zur Erhöhung dieser Anpresskraft F kann, wie in Figur 5 gezeigt, wenigstens ein Bereich eines der Abschnitte des im Wesentlichen streifenförmigen Elements 4 gekrümmt sein. In dem Beispiel in Figur 5 ist der gesamte zweite Abschnitt 4.2 um die Breitenrichtung B gekrümmt. Durch die hieraus resultierende Federwirkung lässt sich dann die Anpresskraft F erhöhen. Es ist auch denkbar, dass mehrere Abschnitte 4.1 bis 4.5 des im Wesentlichen streifenförmigen Elements 4 gekrümmt sind oder auch nur partielle gekrümmte Bereiche aufweisen.

Eine Erhöhung der Anpresskraft F ist auch durch Konturieren der ersten und/oder zweiten Hälfte des Verschlusselements 5.1 und 5.2 möglich. Hierzu zeigt Figur 6 eine Detailansicht eines in Figur 5 gezeigten Schnittes B-B. Dabei kann die Konturierung 22 eine beliebige Gestalt aufweisen. Beispielsweise kann die Konturierung 22 von in die Dickenrichtung D hervorragenden kegelförmigen oder pyramidenförmigen Stümpfen ausgebildet sein. Auch kann das halbe Verschlusselement 5.1 oder das halbe Verschlusselement 5.2 einen wellenförmigen Querschnitt in die Breitenrichtung B aufweisen.

Figur 7 zeigt eine Draufsicht auf einen erfindungsgemäßen Zellverbinder 1 mit mehreren im Wesentlichen streifenförmigen Elementen 4 gemäß einer alternativen Ausführungsform. In dem Beispiel in Figur 7 sind Perforationen 15 in einen zwei im Wesentlichen streifenförmige Elemente 4 verbindenden Steg 14 eingebracht. Durch die Perforationen 15 wird eine Biegesteifigkeit des Stegs 14 um die Längsrichtung L reduziert. Hierdurch lässt sich ein Höhenversatz in die Dickenrichtung D beim Parallelverschalten von zwei Pouch-Zellen 19 einfacher ausgleichen. Auch hier können die Perforationen 15 eine beliebige Querschnittsform aufweisen. Vorzugsweise weisen die Perforationen 15 eine Rechteckform auf.

Figur 8 zeigt eine Detailansicht eines in Figur 7 dargestellten Schnittes C-C. Durch Reduzieren einer Materialstärke in einem materialaufweisenden Abschnitt des Steges 14 lässt sich die Biegesteifigkeit des Stegs 14 gezielt an einen gewünschten Wert einstellen. Auch kann der Steg 14 in die Breitenrichtung B eine bestimmte Querschnittform, beispielsweise eine gewellte Querschnittform, aufweisen.

Figur 9 zeigt eine Draufsicht auf einen erfindungsgemäßen Zellverbinder 1 gemäß einer weiteren alternativen Ausführungsform. In dem Beispiel in Figur 9 weist ein im Wesentlichen streifenförmiges Element 4 einen Verbindungsflansch 16 auf, welcher sich vom zweiten Abschnitt 4.2 und/oder vom vierten Abschnitt 4.4 in die Breitenrichtung B weg erstreckt. Mittels des Verbindungsflansches 16 ist eine einfache und zuverlässige Kontaktierung des im Wesentlichen streifenförmigen Elements 4 an eine übergeordnete stromführende Komponente, beispielsweise eine Stromkontaktschiene oder ein Ableiter eines Batteriemoduls, möglich. Dabei kann der Verbindungsflansch 16 auf eine beliebige Art und Weise formschlüssig, kraftschlüssig und/oder stoffschlüssig mit der übergeordneten stromführenden Komponente verbunden werden. In dem Beispiel in Figur 9 sind zwei Durchgangslöcher in den Verbindungsflansch 16 eingebracht, um das im Wesentlichen streifenförmige Element 4 mit der übergeordneten stromführenden Komponente mittels einer Schraubverbindung zu verbinden. Wird eine metallische Schraube verwendet, so kann ein Stromfluss auch durch die Schraube erfolgen. Der Verbindungsflansch 16 kann aber auch mit der übergeordneten stromführenden Komponente beispielsweise verschweißt, verlötet oder vernietet werden. Auch können entsprechende konstruktive Änderungen am Verbindungsflansch 16 vorgenommen werden, beispielsweise um diesen in die übergeordnete stromführende Komponente einzustecken.

Figur 10 zeigt eine Prinzipdarstellung eines erfindungsgemäßen Verfahrens 100 zum Kontaktieren wenigstens zweier galvanischer Zellen, beispielsweise zweier Pouch-Zellen 19. Im Verfahrensschritt 101 werden die zu verbindenden Ableiter 2 und/oder Litzen 3 (hier nicht dargestellt) so zueinander ausgerichtet, dass diese möglichst flächig aufeinanderliegen, um eine Schweißnaht 18 mit einer besonders hohen Zuverlässigkeit zu erzeugen. Im Verfahrensschritt 102 wird ein erfindungsgemäßer Zellverbinder 1 aus einem im Wesentlichen streifenförmigen Element 4, welches optional vorgebogen sein kann, zwischen die zu verbindenden Ableiter 2 und eine Umhüllung 17 einer der Pouch-Zellen 19 bzw. ein Rahmen eines Batteriemoduls geschoben. Im Verfahrensschritt 103 wird das wenigstens eine im Wesentlichen streifenförmige Element 4 um die Klappachse 8 umgeklappt, wodurch die erste und zweite Klemmfläche 6.1 und 6.2 auf den zu verbindenden Ableitern 2 bzw. Litzen 3 flächig aufliegen und diese mit Hilfe einer Anpresskraft F aufeinanderpressen. Dabei bildet das wenigstens eine im Wesentlichen streifenförmige Element 4 eine Aufnahme 9 zur Aufnahme der zu verbindenden Komponenten aus. Im zusammengeklappten Zustand werden die erste Hälfte des Verschlusselements 5.1 und die zweite Hälfte des Verschlusselements 5.2 verbunden, um ein ungewolltes Öffnen des sich im zusammengeklappten Zustand befindenden im Wesentlichen wenigstens eines streifenförmigen Elements 4 zu verhindern. Die zur kontaktierenden Pouch-Zellen 19 werden dann zu einer Schweißvorrichtung transportiert. Dank des geschlossenen Zellverbinders 1 können sich die fixierten zu kontaktierenden Komponenten, sprich die Ableiter 2 und/oder Litzen 3, nicht zueinander verschieben. Im Verfahrensschritt 104 werden die Ableiter 2 und/oder Litzen 3 verschweißt. Hierzu wird vorzugsweise Laserschweißen verwendet.

Figur 11 zeigt verschiedene Schnittansichten durch einen in Figur 10 dargestellten Schnitt D-D. In Abhängigkeit einer Ausführungsform des verwendeten Zellverbinders 1 entstehen vier verschiedene Schweißnähte 18. Dabei zeigen Figur 11a) und b) Schweißnähte 18 durch einen Zellverbinder 1, welcher kein Schweißfenster 13 aufweist, und die Figuren 11c) und d) Schweißnähte 18 bei Verwenden eines Zellverbinders 1 mit einem Schweißfenster 13. Des Weiteren zeigen Figur 11a) und c) eine Anwendung eines leitfähigen Materials M zur Ausbildung des vierten Abschnitts 4.4 bzw. der zweiten Klemmfläche 6.2. So kann die Schweißnaht 18 in die zweite Klemmfläche 6.2 hineinverlaufen. Gemäß den Figuren 11b) und d) ist dies nicht möglich, da der vierte Abschnitt 4.4 bzw. die zweite Klemmfläche 6.2 von einem Strom isolierenden Material I ausgebildet ist. Hierdurch kann der Zellverbinder 1 als Badstütze wirken. Reicht die Schweißnaht 18 hingegen in den vierten Abschnitt 4.4 hinein, kann eine besonders prozesssichere Kontaktierung der zu verbindenden Ableiter 2 und/oder Litzen 3 sichergestellt werden. In dem Beispiel von Figur 11a) und b) kann durch Aufschmelzen des zweiten Abschnitts 4.2 auch ein gezieltes Legieren der Schweißnähte 18 erfolgen. Generell ist es auch möglich, dass in der Ausführung in Figur 11d) der vollständige Zellverbinder 1 aus dem Strom isolierenden Material I besteht. Durch das Schweißfenster 13 ist trotzdem eine Schweißbarkeit des zu verbindenden Ableiter 2 und/oder Litzen 3 gewährleistet.

Figur 12 zeigt eine Seitenansicht auf einen Laserschweißvorgang zum Kontaktieren zweier elektrischer Kabel mittels des erfindungsgemäßen Zellverbinders 1. Figur 12 dient zur Veranschaulichung, dass anstelle wenigstens eines Ableiters 2 auch eine oder mehrere Litzen 3 von einem oder mehreren stromführenden Kabeln mit Hilfe eines Zellverbinders 1 gemäß einer der im vorigen beschriebenen Ausführungsformen fixiert werden können, um diese besonders zuverlässig verschweißen zu können.

## Patentansprüche

1. Zellverbinder (1) zum miteinander Verbinden von wenigstens zwei Ableitern (2) und/oder Litzen (3), aus wenigstens einem im Wesentlichen streifenförmigen Element (4),
umfassend
wenigstens fünf in eine Längsrichtung (L) am streifenförmigen Element (4) hintereinander angeordneten Abschnitte (4.1, 4.2, 4.3, 4.4, 4.5),
**dadurch gekennzeichnet, dass**
ein erster Abschnitt (4.1) eine erste Hälfte (5.1) eines Verschlusselements ausbildet, ein zweiter Abschnitt (4.2) eine erste Klemmfläche (6.1) ausbildet, ein dritter Abschnitt (4.3) ein Umlenkelement (7) ausbildet, ein vierter Abschnitt (4.4) eine zweite Klemmfläche (6.2) ausbildet und ein fünfter Abschnitt (4.5) eine zweite Hälfte (5.2) des Verschlusselements ausbildet, und wobei der dritte Abschnitt (4.3) dazu eingerichtet ist ein Umklappen des ersten (4.1) und des zweiten Abschnitts (4.2) relativ zum vierten (4.4) und fünften Abschnitt (4.5) um eine in eine orthogonal zur Längsrichtung (L) verlaufende Breitenrichtung (B) durch den dritten Abschnitt (4.3) verlaufende Klappachse (8) zu ermöglichen, sodass sich in einem zusammengeklappten Zustand des streifenförmigen Elements (4) wenigstens ein Abschnitt der ersten und der zweiten Klemmfläche (6.1, 6.2) im Wesentlichen in eine orthogonal zur Längs- (L) und Breitenrichtung (B) verlaufende Dickenrichtung (D) gegenüberliegen und somit eine Aufnahme (9) für die Ableiter (2) und/oder Litzen (3) ausbilden und der erste (4.1) und der fünfte Abschnitt (4.5) im zusammengeklappten Zustand des streifenförmigen Elements (4) miteinander verbindbar sind, um das wenigstens eine streifenförmige Element (4) im zusammengeklappten Zustand zu fixieren.

2. Zellverbinder (1) nach Anspruch 1,
**dadurch gekennzeichnet, dass**
der dritte Abschnitt (4.3) wenigstens eine Perforation (10), ein Scharnier (11) und/oder ein elastisches Material (12) umfasst und/oder wenigstens abschnittsweise profiliert ist.

3. Zellverbinder (1) nach Anspruch 1 oder 2,
**dadurch gekennzeichnet, dass**
der erste Abschnitt (4.1) und der fünfte Abschnitt (4.5) dazu eingerichtet sind einen Formschluss einzugehen, insbesondere durch Umbiegen, Umbördeln, Einrollen, oder Clinchen wenigstens eines der Abschnitte (4.1, 4.5); und/oder der erste Abschnitt (4.1) und der fünfte Abschnitt (4.5) dazu eingerichtet sind einen Kraftschuss und/oder Stoffschluss einzugehen, insbesondere durch Vernieten, Verschrauben, Verschweißen und/oder Verkleben der Abschnitte (4.1, 4.5).

4. Zellverbinder (1) nach einem der Ansprüche 1 bis 3,
**dadurch gekennzeichnet, dass**
der zweite Abschnitt (4.2) eine vollständig in die Dickenrichtung (D) durch den zweiten Abschnitt (4.2) verlaufende Aussparung zur Ausbildung eines Schweißfensters (13) aufweist, insbesondere eine im Wesentlichen rechteckförmige Aussparung, wobei eine längere Kante der Aussparung in die Längsrichtung (L) verläuft.

5. Zellverbinder (1) nach einem der Ansprüche 1 bis 4,
**dadurch gekennzeichnet, dass**
wenigstens zwei in die Längsrichtung (L) parallel zueinander angeordnete streifenförmige Elemente (4) über wenigstens einen sich vom zweiten (4.2) und/oder vom vierten Abschnitt (4.4) in die Breitenrichtung (B) vom streifenförmigen Element (4) weg erstreckenden und in die Längsrichtung (L) verlaufenden Steg (14) verbunden sind.

6. Zellverbinder (1) nach Anspruch 5,
**dadurch gekennzeichnet, dass**
der Steg (14) wenigstens eine Perforation (15) aufweist, wobei insbesondere der Steg (14) eine geringere Stärke in die Dickenrichtung (D) aufweist als das streifenförmige Element (4) und/oder der Steg (14) in die Breitenrichtung (B) gewellt ist.

7. Zellverbinder (1) nach einem der Ansprüche 1 bis 6,
**dadurch gekennzeichnet, dass**
wenigstens ein streifenförmiges Element (4) einen in die Längsrichtung (L) verlaufenden und sich in die Breitenrichtung (B) vom zweiten (4.2) und/oder vierten Abschnitt (4.4) weg erstreckenden Verbindungsflansch (16) zum Kontaktieren des streifenförmigen Elements (4) mit einer dem streifenförmigen Element (4) übergeordneten stromführenden Komponente aufweist.

8. Zellverbinder (1) nach einem der Ansprüche 1 bis 7,
**dadurch gekennzeichnet, dass**
zur Erhöhung einer in die Dickenrichtung (D) wirkenden Anpresskraft (F) der ersten (6.1) und zweiten Klemmfläche (6.2) auf die in der Aufnahme (9) angeordneten Ableiter (2) und/oder Litzen (3) im zusammengeklappten Zustand des wenigstens einen streifenförmigen Elements (4) der zweite Abschnitt (4.2) wenigstens abschnittsweise in die Dickenrichtung (D) gekrümmt ist und/oder wenigstens eine Hälfte des Verschlusselements (5.1, 5.2) eine sich im verbundenen Zustand des Verschlusselements in die Dickenrichtung (D) erstreckende Konturierung (22) aufweist.

9. Zellverbinder (1) nach einem der Ansprüche 1 bis 8,
**dadurch gekennzeichnet, dass**
das wenigstens eine streifenförmige Element (4) vollständig von einem leitfähigen Material (M), insbesondere einem Metall oder einer Metalllegierung und bevorzugt von einem Metallblech ausgebildet ist oder das wenigstens eine streifenförmige Element (4) wenigstens abschnittsweise von einem leitfähigen Material (M), insbesondere einem Metall oder einer Metalllegierung und bevorzugt von einem Metallblech und wenigstens abschnittsweise von einem Strom isolierenden Material (I) ausgebildet ist, wobei das isolierende Material (I) vorteilhaft zumindest den vierten Abschnitt (4.4) ausbildet.

10. Verfahren (100) zum Kontaktieren wenigstens zweier galvanischer Zellen mittels wenigstens einem Zellverbinder (1) nach einem der Ansprüche 1 bis 9, **gekennzeichnet durch** zumindest die folgenden Verfahrensschritte:
- Zueinander Ausrichten zu verbindender Ableiter (2) und/oder Litzen (3);
- Anordnen des Zellverbinders (1) zu den Ableitern (2) und/oder Litzen (3), sodass sich der vierte Abschnitt (4.4) zumindest abschnittsweise mit einer der Aufnahme (9) abgewandten Seite (S₁) auf einer Umhüllung (17) wenigstens einer galvanischen Zelle abstützt und/oder wenigstens ein Ableiter (2) und/oder wenigstens eine Litze (3) auf einer der Aufnahme (9) zugwandten Seite (S₂) des vierten Abschnitts (4.4) aufliegt;
- Umklappen des ersten (4.1) und zweiten Abschnitts (4.2) durch die durch den dritten Abschnitt (4.3) in die Breitenrichtung (B) verlaufende Klappachse (8), um das streifenförmige Element (4) in den zusammengeklappten Zustand zu bringen;
- Verschließen des Verschlusselements;
- Verschweißen der zu verbindenden Ableiter (2) und/oder Litzen (3) oder Verschweißen wenigstens eines Abschnitts des Zellverbinders (1) mit den zu verbindenden Ableitern (2) und/oder Litzen (3), insbesondere mittels wenigstens einer in die Längsrichtung (L) verlaufenden Schweißnaht (18), wobei als Schweißverfahren bevorzugt Laserschweißen eingesetzt wird.

## Claims

1. Cell connector (1) for interconnecting at least two conductors (2) and/or stranded wires (3), the cell connector being composed of at least one substantially strip-shaped element (4),
comprising
at least five portions (4.1, 4.2, 4.3, 4.4, 4.5) arranged one behind the other on the strip-shaped element (4) in a longitudinal direction (L),
**characterized in that**
a first portion (4.1) forms a first half (5.1) of a closure element, a second portion (4.2) forms a first clamping surface (6.1), a third portion (4.3) forms a deflection element (7), a fourth portion (4.4) forms a second clamping surface (6.2) and a fifth portion (4.5) forms a second half (5.2) of the closure element, and the third portion (4.3) being designed to allow the first portion (4.1) and the second portion (4.2) to be folded over relative to the fourth portion (4.4) and fifth portion (4.5) about a folding axis (8) in a width direction (B) running orthogonally to the longitudinal direction (L) and running through the third portion (4.3), so that, in a folded up state of the strip-shaped element (4), at least a portion of the first and the second clamping surface (6.1, 6.2) lie opposite one another substantially in a thickness direction (D) running orthogonally to the longitudinal direction (L) and the width direction (B) and thus form a receptacle (9) for the conductors (2) and/or stranded wires (3) and, in the folded up state of the strip-shaped element (4), the first portion (4.1) and the fifth portion (4.5) can be interconnected in order to fix the at least one strip-shaped element (4) in the folded up state.

2. Cell connector (1) according to claim 1,
**characterized in that**
the third portion (4.3) comprises at least one perforation (10), a hinge (11) and/or an elastic material (12) and/or is profiled at least in portions.

3. Cell connector (1) according to either claim 1 or claim 2,
**characterized in that**
the first portion (4.1) and the fifth portion (4.5) are designed to form a form-fitting connection, in particular by bending, flanging, rolling or clinching at least one of the portions (4.1, 4.5); and/or
the first portion (4.1) and the fifth portion (4.5) are designed to form a force-locking and/or integral bond, in particular by riveting, screwing, welding and/or gluing the portions (4.1,4.5).

4. Cell connector (1) according to any of claims 1 to 3,
**characterized in that**
the second portion (4.2) has a recess for forming a welding window (13), in particular a substantially rectangular recess, which recess runs completely in the thickness direction (D) through the second portion (4.2), a longer edge of the recess running in the longitudinal direction (L).

5. Cell connector (1) according to any of claims 1 to 4,
**characterized in that**
at least two strip-shaped elements (4) arranged parallel to one another in the longitudinal direction (L) are connected via at least one connecting element (14) extending from the second portion (4.2) and/or from the fourth portion (4.4) in the width direction (B) away from the strip-shaped element (4) and running in the longitudinal direction (L).

6. Cell connector (1) according to claim 5,
**characterized in that**
the connecting element (14) has at least one perforation (15), in particular the connecting element (14) having a smaller thickness in the thickness direction (D) than the strip-shaped element (4) and/or the connecting element (14) being corrugated in the width direction (B).

7. Cell connector (1) according to any of claims 1 to 6,
**characterized in that**
at least one strip-shaped element (4) has a connecting flange (16) for contacting the strip-shaped element (4) with a current-carrying component arranged above the strip-shaped element (4), which flange runs in the longitudinal direction (L) and extends in the width direction (B) away from the second portion (4.2) and/or fourth portion (4.4).

8. Cell connector (1) according to any of claims 1 to 7,
**characterized in that**
in order to increase a contact pressure (F), acting in the thickness direction (D), of the first clamping surface (6.1) and second clamping surface (6.2) on the conductors (2) and/or stranded wires (3) arranged in the receptacle (9) in the folded up state of the at least one strip-shaped element (4), the second portion (4.2) is curved at least in portions in the thickness direction (D) and/or at least one half of the closure element (5.1, 5.2) has a contour (22) extending in the thickness direction (D) in the connected state of the closure element.

9. Cell connector (1) according to any of claims 1 to 8,
**characterized in that**
the at least one strip-shaped element (4) is formed entirely from a conductive material (M), in particular a metal or a metal alloy and preferably from a metal sheet, or the at least one strip-shaped element (4) is formed at least in portions from a conductive material (M), in particular a metal or a metal alloy and preferably from a metal sheet and at least in portions from a current-insulating material (I), the insulating material (I) advantageously forming at least the fourth portion (4.4).

10. Method (100) for contacting at least two galvanic cells by means of at least one cell connector (1) according to any of claims 1 to 9,
**characterized by** at least the following method steps:
- aligning the conductors (2) and/or stranded wires (3) to be interconnected;
- arranging the cell connector (1) relative to the conductors (2) and/or stranded wires (3) such that the fourth portion (4.4) is supported at least in portions with a side (S₁) facing away from the receptacle (9) on a casing (17) of at least one galvanic cell and/or at least one conductor (2) and/or at least one stranded wire (3) rests on a side (S₂) of the fourth portion (4.4) facing towards the receptacle (9);
- folding the first portion (4.1) and second portion (4.2) across the folding axis (8) running through the third portion (4.3) in the width direction (B) in order to bring the strip-shaped element (4) into the folded up state;
- closing the closure element;
- welding the conductors (2) and/or stranded wires (3) to be connected or welding at least one portion of the cell connector (1) to the conductors (2) and/or stranded wires (3) to be connected, in particular by means of at least one weld seam (18) running in the longitudinal direction (L), laser welding being preferably used as the welding method.

## Revendications

1. Connecteur de cellule (1) pour interconnecter entre eux au moins deux conducteurs (2) et/ou fils (3) de sortie, constitué d'au moins un élément sensiblement en forme de bande (4),
comprenant
au moins cinq sections (4.1, 4.2, 4.3, 4.4, 4.5) agencées les unes derrière les autres dans une direction longitudinale (L) sur l'élément en forme de bande (4),
**caractérisé en ce que**
une première section (4.1) forme une première moitié (5.1) d'un élément de fermeture, une deuxième section (4.2) forme une première surface de serrage (6.1), une troisième section (4.3) forme un élément de déviation (7), une quatrième section (4.4) forme une seconde surface de serrage (6.2) et une cinquième section (4.5) forme une seconde moitié (5.2) de l'élément de fermeture, et dans lequel la troisième section (4.3) est aménagée pour permettre un rabattement de la première (4.1) et de la deuxième section (4.2) par rapport à la quatrième (4.4) et à la cinquième section (4.5) autour d'un axe de rabattement (8) situé dans une direction de largeur (B) s'étendant orthogonalement à la direction longitudinale (L) et passant par la troisième section (4.3), en sorte que, dans un état replié de l'élément en forme de bande (4), au moins une section de la première et de la seconde surface de serrage (6.1, 6.2) se font face essentiellement dans une direction d'épaisseur (D) s'étendant orthogonalement à la direction longitudinale (L) et à la direction de largeur (B) et forment ainsi un logement (9) pour les conducteurs (2) et/ou les fils (3) de sortie et la première (4.1) et la cinquième section (4.5) peuvent être reliées l'une à l'autre dans l'état replié de l'élément en forme de bande (4), afin de fixer l'au moins un élément en forme de bande (4) dans l'état replié.

2. Connecteur de cellule (1) selon la revendication 1,
**caractérisé en ce que**
la troisième section (4.3) comprend au moins une perforation (10), une charnière (11) et/ou un matériau élastique (12) et/ou est profilée au moins par sections.

3. Connecteur de cellule (1) selon la revendication 1 ou 2,
**caractérisé en ce que**
la première section (4.1) et la cinquième section (4.5) sont aménagées pour établir une liaison par complémentarité de forme, en particulier par pliage, bridage, enroulement ou clinchage d'au moins l'une des sections (4.1, 4.5) ; et/ou
la première section (4.1) et la cinquième section (4.5) sont aménagées pour établir une liaison à force et/ou par complémentarité de matière, en particulier par rivetage, vissage, soudage et/ou collage des sections (4.1, 4.5).

4. Connecteur de cellule (1) selon l'une des revendications 1 à 3,
**caractérisé en ce que**
la deuxième section (4.2) présente un évidement s'étendant entièrement dans la direction de l'épaisseur (D) à travers la deuxième section (4.2) pour former une fenêtre de soudage (13), en particulier un évidement sensiblement rectangulaire, dans lequel un bord plus long de l'évidement s'étend dans la direction longitudinale (L).

5. Connecteur de cellule (1) selon l'une des revendications 1 à 4,
**caractérisé en ce que**
au moins deux éléments en forme de bande (4) agencés parallèlement l'un à l'autre dans la direction longitudinale (L) sont reliés par l'intermédiaire d'au moins une entretoise (14) s'étendant à partir de la deuxième (4.2) et/ou de la quatrième section (4.4) dans la direction de la largeur (B) à partir de l'élément en forme de bande (4) et s'étendant dans la direction longitudinale (L).

6. Connecteur de cellule (1) selon la revendication 5,
**caractérisé en ce que**
l'entretoise (14) présente au moins une perforation (15), dans lequel l'entretoise (14) présente en particulier une épaisseur plus faible dans la direction de l'épaisseur (D) que l'élément en forme de bande (4) et/ou l'entretoise (14) est ondulée dans la direction de la largeur (B).

7. Connecteur de cellule (1) selon l'une des revendications 1 à 6,
**caractérisé en ce que**
au moins un élément en forme de bande (4) présente une bride de liaison (16) s'étendant dans la direction longitudinale (L) et s'éloignant dans la direction de la largeur (B) de la deuxième (4.2) et/ou de la quatrième section (4.4) pour mettre en contact l'élément en forme de bande (4) avec un composant conducteur de courant placé au-dessus de l'élément en forme de bande (4).

8. Connecteur de cellule (1) selon l'une des revendications 1 à 7,
**caractérisé en ce que**
pour augmenter une force de pression (F) agissant dans la direction de l'épaisseur (D) de la première (6.1) et de la seconde surface de serrage (6.2) sur les conducteurs (2) et/ou les fils (3) de sortie agencés dans le logement (9) dans l'état replié de l'au moins un élément en forme de bande (4), la deuxième section (4.2) est courbée au moins par sections dans la direction de l'épaisseur (D) et/ou au moins une moitié de l'élément de fermeture (5.1, 5.2) présente un contour (22) qui s'étend dans la direction de l'épaisseur (D) lorsque l'élément de fermeture est assemblé.

9. Connecteur de cellule (1) selon l'une des revendications 1 à 8,
**caractérisé en ce que**
l'au moins un élément en forme de bande (4) est formé entièrement d'un matériau (M) conducteur, en particulier d'un métal ou d'un alliage métallique et de préférence d'une tôle métallique ou l'au moins un élément en forme de bande (4) est formé au moins par sections d'un matériau (M) conducteur, en particulier d'un métal ou d'un alliage métallique et de préférence d'une tôle métallique et au moins par sections d'un matériau (I) isolant du courant, dans lequel le matériau (I) isolant forme avantageusement au moins la quatrième section (4.4).

10. Procédé (100) de mise en contact d'au moins deux cellules galvaniques au moyen d'au moins un connecteur de cellule (1) selon l'une des revendications 1 à 9,
**caractérisé par** au moins les étapes de procédé suivantes :
- alignement mutuel des conducteurs (2) et/ou des fils (3) de sortie à relier ;
- agencement du connecteur de cellule (1) par rapport aux conducteurs (2) et/ou aux fils (3) de sortie, en sorte que la quatrième section (4.4) s'appuie au moins par sections avec un côté (S₁) opposé au logement (9) sur une enveloppe (17) d'au moins une cellule galvanique et/ou qu'au moins un conducteur (2) et/ou au moins un fil (3) de sortie repose sur un côté (S₂) de la quatrième section (4.4) tourné vers le logement (9) ;
- rabattement de la première (4.1) et de la deuxième section (4.2) par l'axe de rabattement (8) passant par la troisième section (4.3) s'étendant dans la direction de la largeur (B), afin d'amener l'élément en forme de bande (4) dans l'état replié ;
- fermeture de l'élément de fermeture ;
- soudage des conducteurs (2) et/ou des fils (3) de sortie à relier ou soudage d'au moins une section du connecteur de cellule (1) avec les conducteurs (2) et/ou les fils (3) de sortie à relier, en particulier au moyen d'au moins un cordon de soudure (18) s'étendant dans la direction longitudinale (L), dans lequel le procédé de soudage utilisé est de préférence le soudage au laser.
